# EUROPEAN PATENT APPLICATION

(11) **EP 4 207 180 A1**
(43) Date of publication of application: **05.07.2023**
(21) Application number: 21861074.9
(22) Date of filing: 26.07.2021
(51) Int. Cl.: G10G 1/04, G10H 1/00

(54) **INFORMATION PROCESSING METHOD, INFORMATION PROCESSING PROGRAM, AND INFORMATION PROCESSING DEVICE**

(30) Priority: 31.08.2020 JP 2020146425
(71) Applicant: Sony Group Corporation, Minato-Ku, Tokyo, 108-0075 (JP)
(72) Inventor: KISHI, Haruhiko, Tokyo 141-0022 (JP)
(74) Representative: 2SPL Patentanwälte PartG mbB
(86) International application number: PCT/JP2021/027524
(87) International publication number: WO 2022/044646

(57) **Abstract**

The information processing device 100 provides an interface capable of generating music information by editing a part of elements forming the music information, and generates new music information by a machine learning model on the basis of a plurality of pieces of music information created using the interface.

## Description

### Field

The present disclosure relates to an information processing method, an information processing program, and an information processing device.

### Background

With the advancement of artificial intelligence (AI), utilization of computers in the field of art has been advanced.

For example, a technique is known in which machine learning is performed on existing music as learning data to generate a learning model for music generation, and a computer is used to compose new music (for example, Patent Literature 1). In such a technology, it is possible to imitate features of existing music or generate a more natural melody by using a Markov model.

### Citation List

### Patent Literature

Patent Literature 1: US Patent No. 9110817

### Summary

### Technical Problem

According to the conventional technique, since the music data proposed (generated) by AI can be used in composition work, the user can compose music on the basis of more various viewpoints.

In the automatic composition function using AI, the user can receive the automatically created music information by setting an image such as bright or dark, but there is a demand for easily editing the music information and receiving provision of the music information matching the user's preference.

Accordingly, the present disclosure proposes an information processing method, an information processing program, and an information processing device capable of improving convenience of an automatic composition function by AI.

### Solution to Problem

To solve the problems described above, an information processing method of an embodiment according to the present disclosure, the method including:
providing an interface capable of generating the music information by editing a part of elements forming the music information; and
generating new music information by a machine learning model on a basis of a plurality of pieces of music information created using the interface.

### Brief Description of Drawings

FIG. 1 is a conceptual diagram illustrating a flow of information processing according to an embodiment.
FIG. 2 is a diagram illustrating an example of a data configuration of style information according to the embodiment.
FIG. 3 is a diagram (1) illustrating an example of a display screen when a producer terminal according to the embodiment generates the style information.
FIG. 4 is a diagram (2) illustrating an example of a display screen when the producer terminal according to the embodiment generates the style information.
FIG. 5 is a diagram (3) illustrating an example of a display screen when the producer terminal according to the embodiment generates the style information.
FIG. 6 is a diagram (4) illustrating an example of a display screen when the producer terminal according to the embodiment generates the style information.
FIG. 7 is a diagram (5) illustrating an example of a display screen when the producer terminal according to the embodiment generates the style information.
FIG. 8 is a diagram (1) illustrating an example of a display screen when the producer terminal according to the embodiment executes composition processing.
FIG. 9 is a diagram (2) illustrating an example of a display screen when the producer terminal according to the embodiment executes the composition processing.
FIG. 10 is a diagram (3) illustrating an example of a display screen when the producer terminal according to the embodiment executes the composition processing.
FIG. 11 is a diagram illustrating an example of an information processing system according to the embodiment.
FIG. 12 is a diagram illustrating a configuration example of an information processing device according to the embodiment.
FIG. 13 is a diagram illustrating an example of user information according to the embodiment.
FIG. 14 is a diagram illustrating an example of a style information table according to the embodiment.
FIG. 15 is a diagram illustrating an example of a style information management table according to the embodiment.
FIG. 16 is a diagram illustrating an example of a produced music information table according to the embodiment.
FIG. 17 is a diagram illustrating a configuration example of the producer terminal according to the embodiment.
FIG. 18 is a flowchart (1) illustrating a procedure of an information processing device 100 according to the embodiment.
FIG. 19 is a flowchart (2) illustrating a procedure of the information processing device 100 according to the embodiment.
FIG. 20 is a diagram illustrating an example of a conceptual diagram of a configuration of the information processing system.
FIG. 21 is a diagram illustrating an example of catalog display.
FIG. 22 is a diagram illustrating an example of mapping by three-dimensional graphics.
FIG. 23 is a hardware configuration diagram illustrating an example of a computer that implements functions of the information processing device and the producer terminal.

### Description of Embodiments

Hereinafter, embodiments of an information processing method, an information processing program, and an information processing device disclosed in the present application will be described in detail with reference to the drawings. Note that the present invention is not limited by this embodiment.

The present disclosure will be described according to the following order of items.
1. Embodiment
   1-1. Example of information processing according to embodiment
   1-2. Configuration of information processing system according to embodiment
   1-3. Configuration of information processing device according to embodiment
   1-4. Configuration of producer terminal according to embodiment
   1-5. Procedure of Information Processing According to Embodiment
   1-6. Effects According to Embodiments
2. Conceptual diagram of configuration of information processing system
   2-1. Overall configuration
   2-2. Server device
   2-3. Each app unit
3. Other Embodiments
4. Hardware Configuration
5. Conclusion

### [1. Embodiment]

### [1-1. Example of information processing according to embodiment]

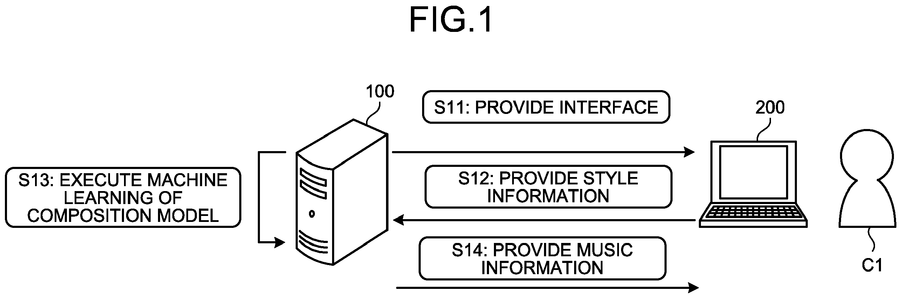

An example of information processing according to an embodiment will be described with reference to FIG. 1. FIG. 1 is a conceptual diagram illustrating a flow of information processing according to the embodiment. The information processing according to the embodiment is executed by an information processing device 100 and a producer terminal 200.

In the present embodiment, a case where the information processing device 100 is an information processing device that provides a service related to creation of content as a work (also simply referred to as a "service") will be described as an example. Note that, in the following, music (music content) will be described as an example of content, but the content is not limited to music, and may be various types of content such as video content of movies and the like and text content of books and the like (novels and the like). Furthermore, the music referred to herein is not limited to one piece of completed music (whole music), and is a concept including various music information such as a part of sound sources constituting one music (music) and a short sound used for sampling.

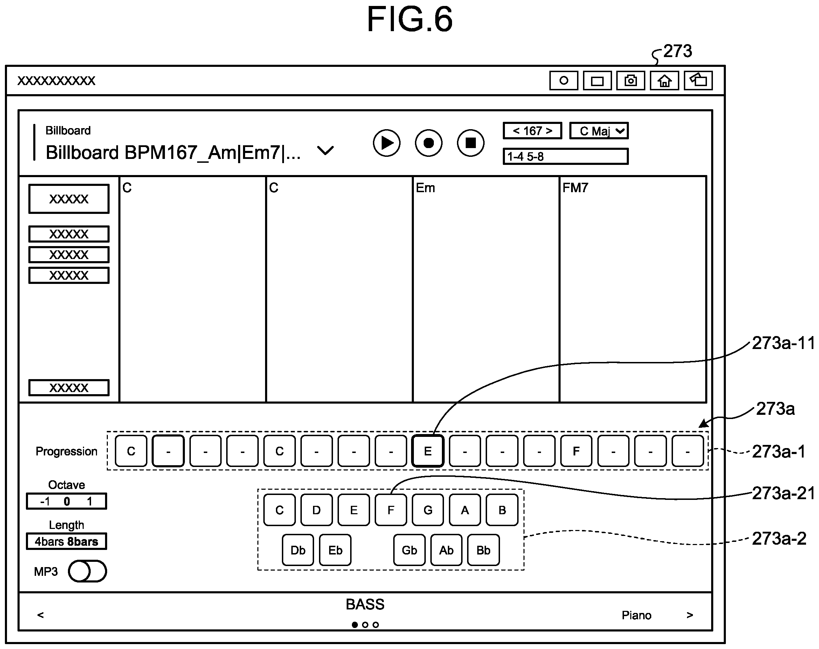

The information processing device 100 communicates with the producer terminal 200 of the user who uses the service provided by the information processing device 100 by using a network N (see FIG. 6) such as the Internet. Note that the number of the producer terminals 200 is not limited to that illustrated in FIG. 1.

The information processing device 100 is a server device that executes information processing related to an automatic composition function by AI of the producer terminal 200. For example, the information processing device 100 is what is called a cloud server, executes automatic composition by AI according to information instructed from the producer terminal 200 via the network N, and provides the producer terminal 200 with generated music information.

The producer terminal 200 is an information processing terminal such as a smartphone, a personal computer (PC), or a tablet terminal. Various program applications are installed in the producer terminal 200. An application related to creation of music is installed in the producer terminal 200. For example, the producer terminal 200 has an automatic composition function by AI added by a plug-in (extension app) to an app such as a digital audio workstation (DAW) that achieves a comprehensive music production environment. For example, the plug-in can take the form of Steinberg's Virtual Studio Technology (VST) (registered trademark), AudioUnits, Avid Audio eXtension (AAX), or the like. Furthermore, the producer terminal 200 is not limited to the DAW, and for example, a mobile app such as iOS may be used.

A flow of information processing will be described with reference to FIG. 1. For example, the information processing device 100 provides an interface for generating the style information to the producer terminal 200 (step S11). The style information is learning data used when machine learning of a composition model is executed.

The producer terminal 200 activates the DAW and displays the interface provided from the information processing device 100 using a plug-in or the like. A producer C1 operates the producer terminal 200 to generate the style information and provides the style information to the information processing device 100 (step SS12).

Here, the user of the producer terminal 200 will be described as the producer C1, but the present invention is not limited thereto. For example, the user of the producer terminal 200 is any of an administrator who operates and manages the entire system, a composer who creates music, an arranger, a producer such as a studio engineer, and a general user who receives music information provided via the automatic composition function.

The information processing device 100 collects the style information from the producer terminal 200 (another terminal device not illustrated), and executes the machine learning of the composition model using the plurality of pieces of collected style information (step S13). For example, the composition model corresponds to a Markov model or the like.

The information processing device 100 generates new music information using the composition model and provides the music information to the producer terminal 200 (step S14).

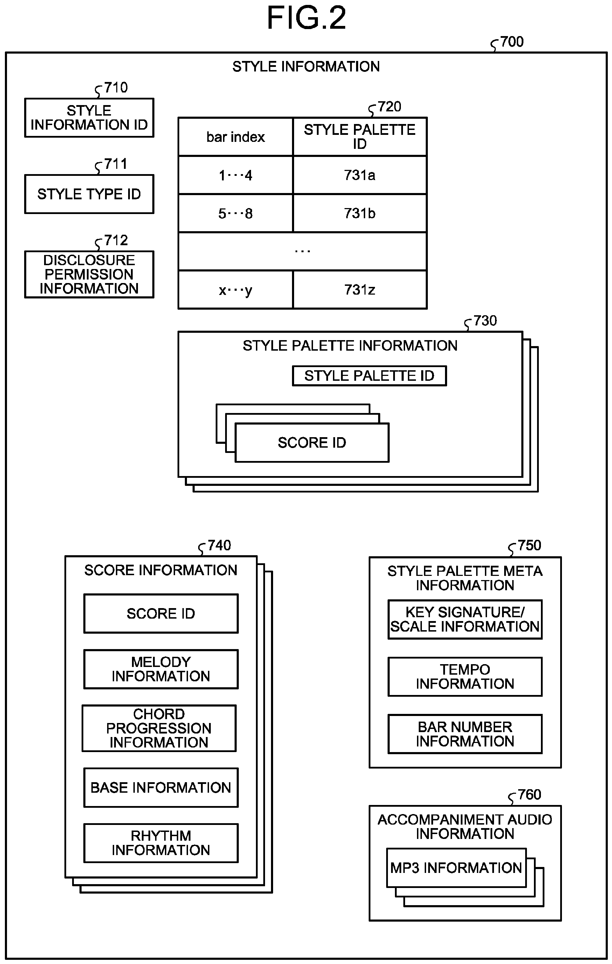

Next, an example of the style information will be described. The style information includes melody information, chord information, base information, rhythm information, and the like. FIG. 2 is a diagram illustrating an example of a data configuration of style information according to the embodiment. A style information 700 includes a style information ID 710, a style type ID 711, disclosure permission information 712, style palette sequence information 720, style palette information 730, score information 740, style palette meta information 750, and accompaniment audio information 760.

The style information ID 710 is information for identifying the style information 700. The style type ID 711 is information for identifying the type to which the style information 700 belongs. The disclosure permission information 712 is information of whether or not to permit the corresponding style information 700 to be disclosed to a general user. The disclosure permission information 712 may be binary information.

The style palette sequence information 720 is information indicating the order of the style palette information 730. The style palette sequence information 720 includes a style palette ID uniquely indicating the style palette information 730 and a bar index as a set, and is information for managing the order of the style palette information 730 in music by including a plurality of the sets. For example, in the example illustrated in FIG. 2, it is defined that one to four bars of music correspond to a style palette ID 731a, five to eight bars correspond to a style palette ID 731b, and x to y bars correspond to a style palette ID 731z.

The style palette information 730 is information in which a score ID of the score information 740 for the same bar is registered in a style palette ID that is identification information of the style palette information.

In the style palette information 730, score IDs of a plurality of pieces of score information 740 having similar chord progression of chord information may be bundled. Similar chord progressions are, for example, identical chord progressions. Alternatively, in the similar chord progression, each chord may be classified into Tonic (T), Sub-dominat (S), and Dominat (D), and sequences of T, S, and D may be the same. Note that in a case of C major A minor, T is C/Em/Am, S is F, Dm, and D is G, Dm7-5. Since both the chord progressions C-D-G-C and Em-Dm-Bm7-5 Am are T-S-D-T, they can be considered as the same chord progression. Furthermore, similar chord progressions can be classified on the basis of similar chord progressions by machine learning or deep learning, for example, instead of using music theory.

The score information 740 includes feature amounts of a plurality of types (elements) extracted from music. The score information 740 includes a score ID, melody information, chord progression information, base information, and rhythm information. The score ID is identification information of the score information. The melody information is a melody in a bar having a prescribed length. The chord progression information is information indicating a chord progression in a bar having a prescribed length. The base information is information indicating the progression of a base sound in a bar having a specified length. The rhythm information is information indicating the progression of a drum sound (the pattern or tempo of the drum) in a bar having a prescribed length.

The style palette meta information 750 includes key signature/scale information, tempo information, and bar number information. The key signature/scale information is information for identifying the key signature of the music corresponding to the style information 700, and whether it is a major key (C major, D major, A major, or the like) or a short key (A minor, E minor, B minor, or the like) is set. The tempo information is information indicating the tempo of music corresponding to the style information 700, and is set by Beats Per Minute (BPM) or the like. The bar number information indicates the number of bars corresponding to the style information 700. For example, four bars, eight bars, and the like are set as the bar number information.

The accompaniment audio information 760 includes a plurality of pieces of MP3 (MPEG-1 Audio Layer-3) information. The MP3 information is information of music uniquely recorded by the producer C1 in association with the melody information, the chord progression information, the base information, and the rhythm information set in the score information 740.

The information processing device 100 executes machine learning using the style information 700 described with reference to FIG. 2 as learning data and generates a composition model. Therefore, the information processing device 100 does not learn the music information itself, but learns the style information configured by time-series feature amounts of a plurality of types (elements) such as the melody information, the chord progression information, the base information, and the rhythm information extracted from the music information. In other words, since the information processing device 100 learns the plurality of feature amounts extracted in advance from the music information, the load of the information processing is small as compared with a case of learning the music information itself, and the music information to the user can be efficiently provided.

For example, it is assumed that the information processing device 100 provides the style information serving as the learning data from the producer terminal 200. The information processing device 100 presents an interface for creating the style information to the producer terminal 200. The producer C1 generates new style information using the interface displayed on the producer terminal 200, and provides the information processing device 100 with the new style information.

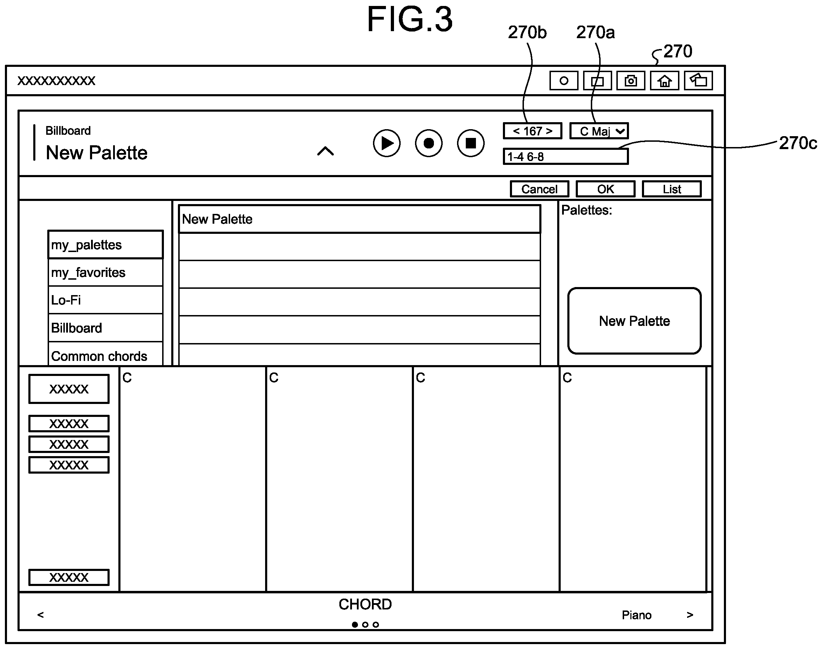

Specifically, a process of creating music by a producer will be described. FIGS. 3 to 7 are diagrams illustrating an example of a display screen when the producer terminal 200 according to the embodiment generates the style information. The display screen (window) illustrated in FIGS. 3 to 7 corresponds to the interface provided by the information processing device 100. When the producer activates the automatic composition function on the producer terminal 200, a window 270 illustrated in FIG. 3 is displayed on the producer terminal 200.

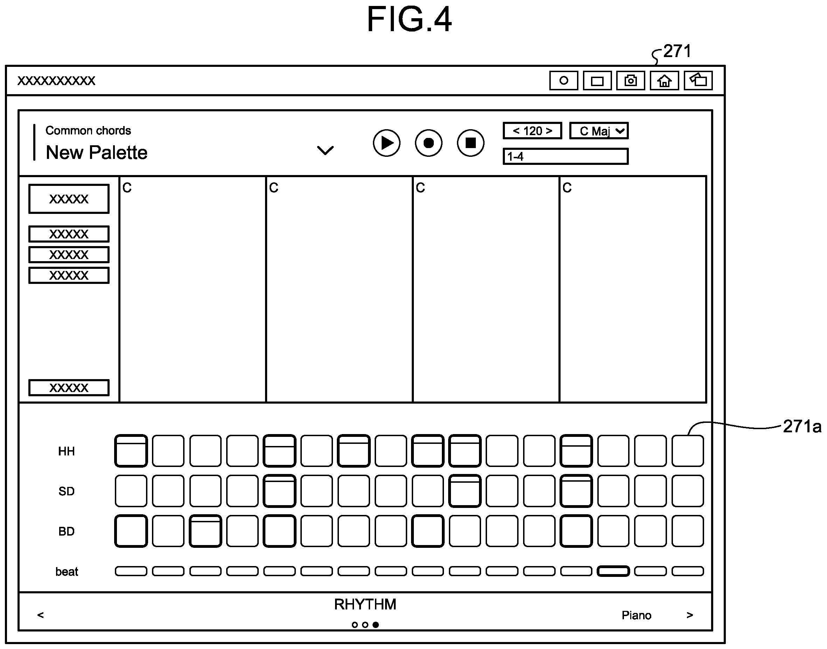

The window 270 in FIG. 3 includes a key signature/scale setting section 270a, a tempo setting section 270b, and a bar number setting section 270c. The key signature/scale setting section 270a is a region where the key signature/scale information can be set. In English and American notation, the key signature information is C, D, E, F, G, A, B, or the like, and the scale information is minor, major, or the like. The key signature/scale information is a combination of key signature information and scale information, and is indicated by C-major, D-minor, or the like. The tempo setting section 270b is a region where the tempo information can be set. For example, 120 BPM or the like is designated as the tempo information. The bar number setting section 270c is a region in which the bar number information can be set. For example, four bars, eight bars, 16 bars, and the like are set as the bar number information. The producer C1 operates the producer terminal 200 to input the key signature/scale information, the tempo information, and the bar number information. Following the window 270 illustrated in FIG. 3, a window 271 illustrated in FIG. 4 is displayed on the producer terminal 200.

The window 271 in FIG. 4 includes a rhythm information setting section 271a. The rhythm information setting section 271a is a region in which the rhythm information can be set. For example, elements of rhythm include Hi-Hat (HH), Snare-Drum (hereinafter, SD), Bass-Drum (hereinafter, BD), and the like. In the rhythm information setting section 271a, input buttons of HH, SD, and BD are arranged in a grid shape for each 16th note. The producer C1 can input a rhythm pattern by arbitrarily setting each input button to ON (active) or OFF (inactive). In a case where the input button is ON, the sound intensity (hereinafter, velocity) can be further set. For example, velocity is a value of 0 to 127, but when the input button is tapped, 100 is input as an initial value. By swiping up and down, the producer C1 can increase or decrease the value of velocity and easily change the value of velocity.

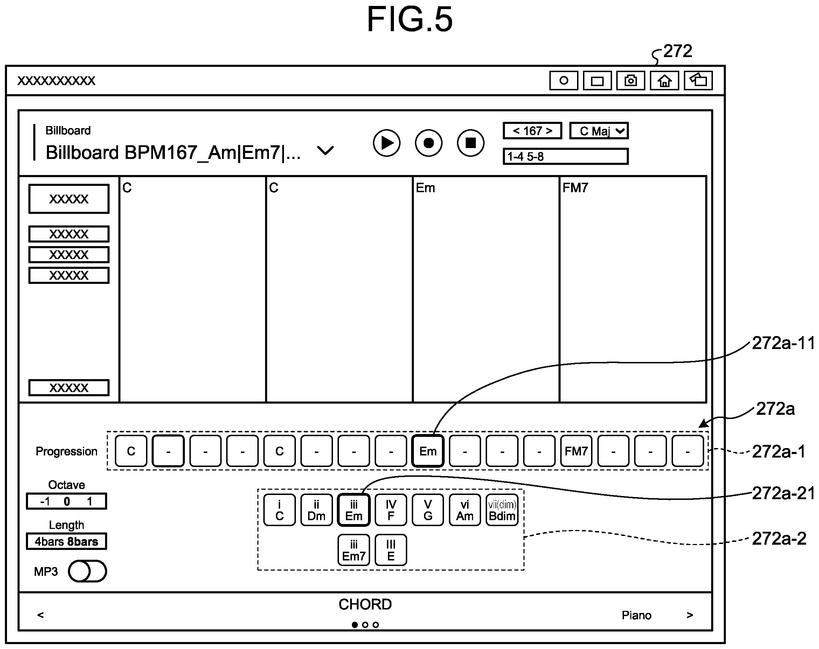

In the rhythm information setting section 271a, four consecutive input buttons arranged side by side indicate the rhythm information of one bar. One input button corresponds to one beat. The highlighted input button is activated, and the non-highlighted input button is deactivated. Active and inactive information and a value of velocity for each beat corresponding to HH, SD, and BD are feature amounts of the rhythm information. The feature amounts of the rhythm information are associated with bar indexes for each bar. The producer C1 operates the producer terminal 200 to input rhythm information. The producer terminal 200 stores the input rhythm information as the rhythm information of the score information 740. Following the window 271 illustrated in FIG. 4, a window 272 illustrated in FIG. 5 is displayed on the producer terminal 200.

The window 272 in FIG. 5 includes a chord progression information setting section 272a. The chord progression information setting section 272a is a region in which chord progression information can be set. For example, four consecutive grid-like input regions of the region 272a-1 indicate one bar of chord progression information. When the input region of the region 272a-1 is selected and the selection button of the region 272a-2 is pressed, the chord corresponding to the pressed selection button is set to the selected input region.

The chords include C, Dm, Em, F, G, Am, Bm, and the like, and can be arranged for each bar. For example, in a case of four-bar style information, the chord progression information is |Em|Am|F|G|, ICIDmIEmIFI, or the like. The chord can also be changed for each beat in the bar.

For example, when the producer C1 operates the producer terminal 200 to press the selection button 272a-21 of "Em" in a state where the input region 272a-11 is selected, the chord "Em" is set in the input region 272a-11. Thus, the producer C1 can easily select by a selection button having a basic chord, such as C, Dm, Em, F, G, Am, or Bm, but can also input a complex chord, such as CM7, C7, or Csus4.

The order of the chords included in the region 272a-1 is the feature amount of the chord progression information. The feature amount of the chord progression information is associated with the bar index for each bar. The producer terminal 200 stores the input chord progression information as the chord progression information of the score information 740. Following the window 272 illustrated in FIG. 5, a window 273 illustrated in FIG. 6 is displayed on the producer terminal 200.

The window 273 in FIG. 6 includes a base information setting section 273a. The base information setting section 273a is a region in which the base information can be set. For example, four consecutive input regions of the region 273a-1 indicate one bar of the base information. When the input region of the region 273a-1 is selected and the selection button of the region 273a-2 is pressed, the chord corresponding to the selection button is set to the selected input region. Basically, the base note corresponds to a chord name, and for example, for the C chord, the base note is C, for the Dm chord, the base note is D, and for the Em chord, the base note is E.

Note that the producer C1 can set a note different from the chord name as the base note. For example, for the C chord, a base note of F can be specified, for the Dm chord, a base note of B can be specified, and for the Em chord, a base note of F can be specified. For example, when the chord is different from the base note, the chord is expressed by a fraction, the denominator is expressed by the base note, and the numerator is expressed by the chord name. That is, when the base note of F is designated for the chord of C, the notation is "C/F".

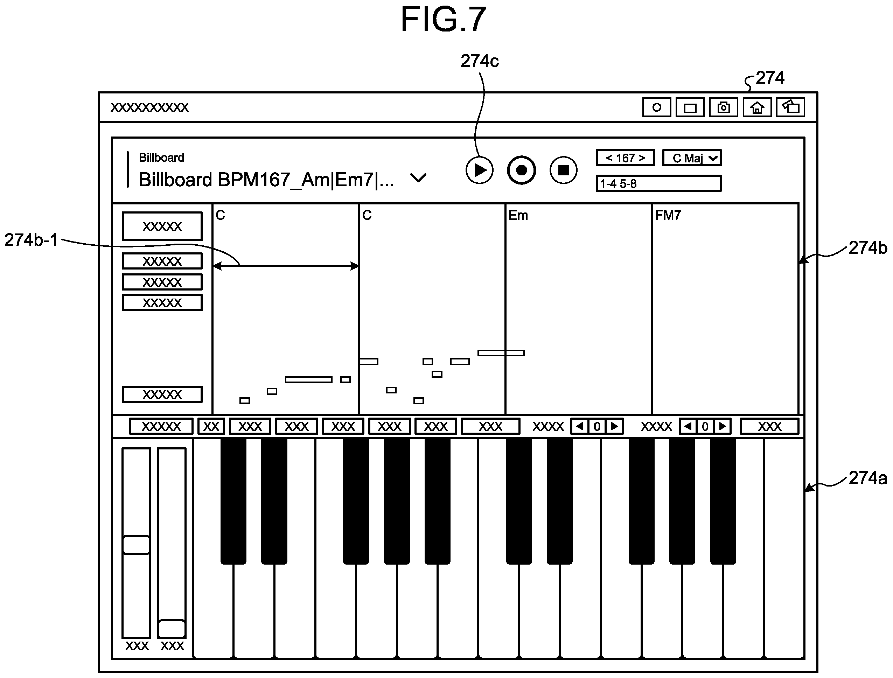

When the producer C1 operates the producer terminal 200 to press the selection button 273a-21 of "F" in a state where the input region 273a-11 is selected, the base note "F" is set in the input region 273a-11. In a case where the chord name C has already been set for the same input region, "C/F" is set. The order of the base notes included in the region 273a-1 is the feature amount of the base information. The feature amount of the base information is associated with the bar index for each bar. The producer terminal 200 stores the input base information as the base information of the score information 740. Following the window 273 illustrated in FIG. 6, a window 274 illustrated in FIG. 7 is displayed on the producer terminal 200.

The window 274 in FIG. 7 includes a melody information setting section 274a. The melody information setting section 274a is a region where the melody information can be set. For example, when the producer C1 presses a reproduction button 240c, the producer terminal 200 performs the accompaniment corresponding to the chord progression information, the base information, and the rhythm information set in FIGS. 3 to 5.

The producer C1 operates the producer terminal 200 while listening to the accompaniment, and presses the image of the keyboard of the piano of the melody information setting section 274a, thereby inputting

(playing) the melody information corresponding to the pressed time and the pressed position of the keyboard. The input melody information is displayed in a partial region 274b. In the partial region 274b, the range of one bar is a range 274b-1. The melody information is displayed in a viewable manner by a bar, a position of the bar corresponds to a scale, and a length of the bar indicates a length of sound. The scale and the length of sound in each bar are feature amounts of the melody information. The feature amount of the melody information is associated with the bar index for each bar.

The producer terminal 200 stores the input melody information as the melody information of the score information 740. Note that the producer C1 can input the melody information again without registering the melody information in the score information 740 by making the retry request.

Here, in the window 274 of FIG. 7, the producer C1 can repeatedly generate a plurality of pieces of melody information while fixing the chord progression information, the base information, and the rhythm information. The producer terminal 200 generates the style information 700 described in FIG. 2 on the basis of the information input in the windows of FIGS. 3 to 7, and provides the generated style information 700 to the information processing device 100.

Hereinafter, an example of processing in which the producer terminal 200 generates the style information 700 will be described. The producer terminal 200 sets a set of the chord progression information, the base information, and the rhythm information generated in FIGS. 4 to 6 and one melody information generated in FIG. 7 as one piece of score information 740, and adds a unique score ID thereto. In a case where a plurality of pieces of melody information is generated, the producer terminal 200 generates score information 740 for each piece of melody information, and adds a score ID to each piece of score information 740.

In a case where a plurality of pieces of score information 740 is generated, the producer terminal 200 bundles similar pieces of chord progression information into one piece of style palette information 730 on the basis of the chord progression information of the plurality of pieces of score information 740, and adds a unique style palette ID thereto.

The producer terminal 200 refers to a score information 470 corresponding to the score ID of the style palette information, specifies the bar index corresponding to the melody information, the chord progression information, the base information, and the rhythm information, specifies the relationship between the bar index and the style palette ID, and generates the style palette sequence information 720. The producer C1 may appropriately specify the relationship between the bar index and the style palette ID.

The producer terminal 200 sets the key signature/scale information, the tempo information, and the bar number information input in FIG. 3 as the style palette meta information 750. In a case of receiving the input of the MP3 information by specifying the style information, the producer terminal 200 sets the MP3 information in the accompaniment audio information 760.

In a case of generating the style information 700, the producer terminal 200 adds the unique style information ID 710. The producer terminal 200 sets the style type ID 711 and the disclosure permission information 712 according to the input from the producer C1.

As described above, the information processing device 100 provides the producer terminal 200 with an interface capable of generating music information by fixing a part of elements among a plurality of elements forming the music information and editing other elements. The information processing device 100 generates new music information on the basis of a plurality of pieces of music information created using the interface. For example, the music information corresponds to the score information 740 of the style information 700. The fixed elements are the chord progression information, the base information, and the rhythm information. The other elements are melody information, and when a plurality of pieces of melody information is generated, a plurality of pieces of score information 740 corresponding to the melody information is generated.

Consequently, the producer C1 can easily create the style information, and the information processing device 100 can easily receive provision of the style information. The information processing device 100 executes machine learning of the composition model by using the plurality of pieces of provided style information.

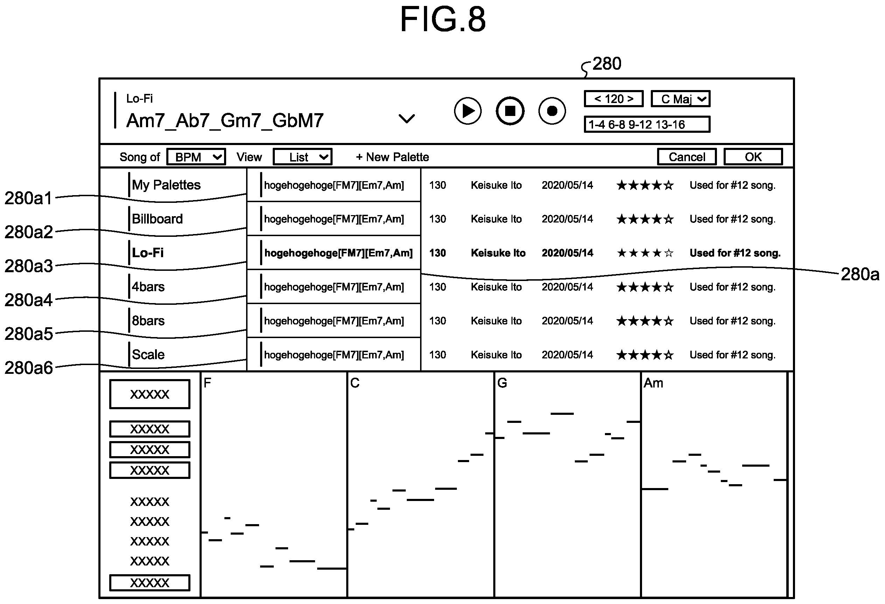

Subsequently, when the above-described processing ends, the producer C1 can perform composition processing by AI by executing data communication with the information processing device 100. FIGS. 8 to 10 are diagrams illustrating an example of a display screen when the producer terminal 200 according to the embodiment executes composition processing. The display screen (window) illustrated in FIGS. 8 to 10 corresponds to the interface provided by the information processing device 100. When the producer C1 activates the automatic composition function on the producer terminal 200, a window 280 illustrated in FIG. 8 is displayed on the producer terminal 200.

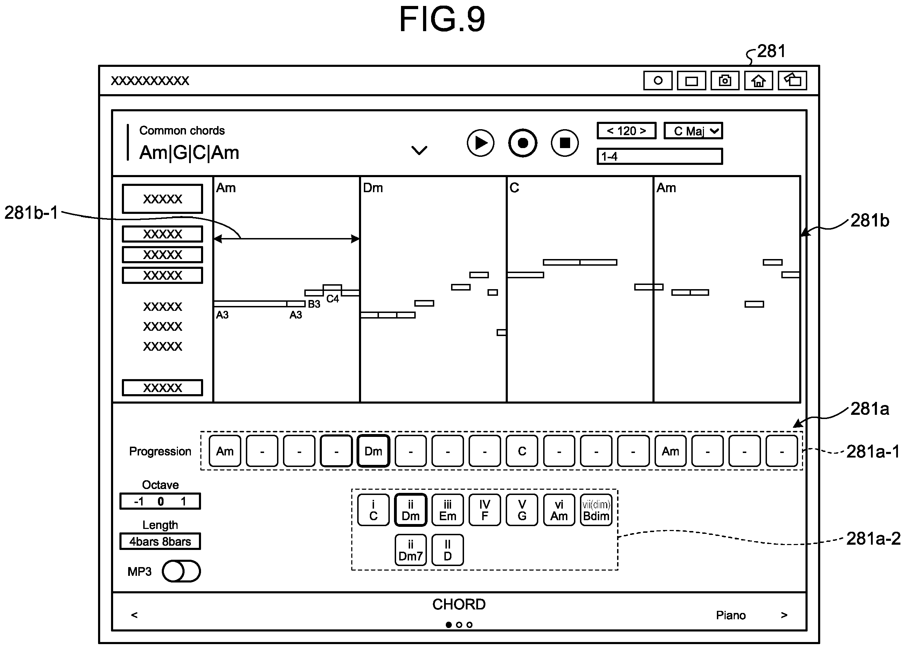

The window 280 in FIG. 8 includes a style information list 280a. The producer C1 operates the producer terminal 200 to select any piece of style information from the plurality of pieces of style information included in the style information list 280a. In the example illustrated in FIG. 8, names 280a1 to 280a7 of the style information is displayed in the style information list 280a. For example, it is assumed that each of the names 280a1 to 280a7 of the style information is associated with each style information ID. The creation date and time, an evaluation, a comment, and the like of the style information may be displayed together in the style information list 280a in association with the name of the style information. The producer C1 operates the producer terminal 200 to select the name of the style information. When any one of the names 280a1 to 280a7 of the style information displayed in the style information list 280a is selected, a window 281 illustrated in FIG. 9 is displayed on the producer terminal 200.

The window 281 in FIG. 9 includes a chord progression information setting section 281a and a melody information display section 281b. The description of the chord progression information setting section 281a includes a region 281a-1 for setting the chord progression information and a region 281a-2 for displaying a chord selection button, similarly to the chord progression information setting section 272a described with reference to FIG. 5. The producer terminal 200 sets the chord progression information of the style information selected in the window 280 in FIG. 8 in the region 281a-1. The producer terminal 200 displays the melody information of the style information selected in the window 280 in FIG. 8 on the melody information display section 281b.

The producer C1 can change the chord progression set in the region 281a-1 to his/her preference. For example, the producer C1 can change the chord progression of |C|Dm|Em|F| to the chord progression of |C|Dm7|Em7|FM7| by operating the selection button in the region 281a-2 and the region 281a-1. The producer terminal 200 notifies the information processing device 100 of information of the changed chord progression.

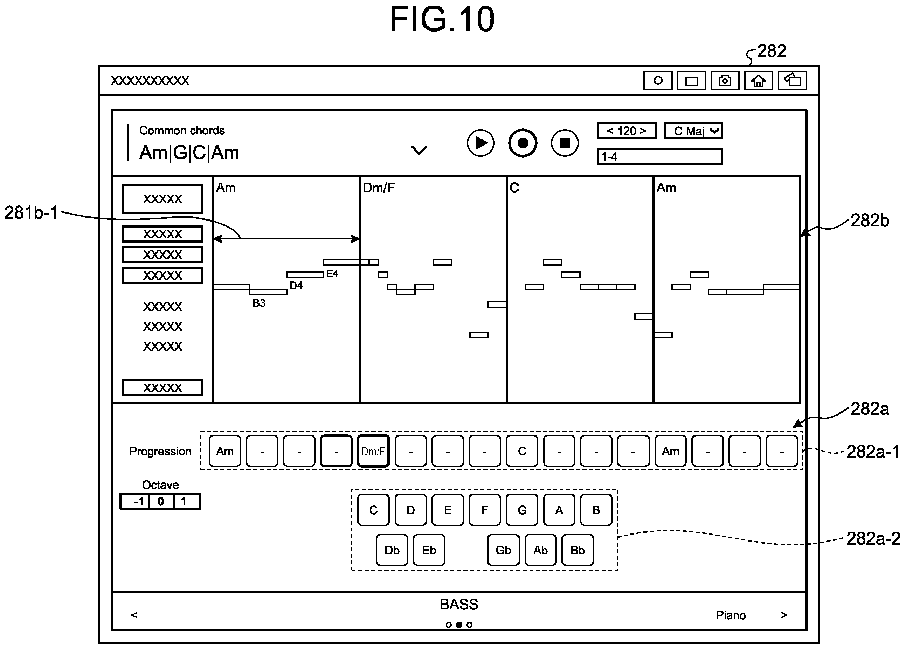

In a case where the chord progression is changed as described above, the information processing device 100 can instantaneously create new style information. For example, in a case where the chord progression information (ICIDmIEmIFI) is included in style information 700A selected in the window 280 in FIG. 8, the processing described in FIG. 9 is executed, thereby generating new style information 710A' including the chord progression information (|C|Dm7|Em7|FM7|). The style information 700A and the style information 710A' are common for information other than the style information ID and the chord progression information. The style information 710A' is added to the style information list 280a. When the change of the chord progression information is completed in the window 281, the window 282 in FIG. 10 is displayed on the producer terminal 200.

The window 282 in FIG. 10 includes the base information setting section 273a and a melody information display section 282b. The description of the base information setting section 273a includes a region 282a-1 for setting the base information and a region 282a-2 for displaying a selection button of the base note, similarly to the base information setting section 273a described with reference to FIG. 6. The producer terminal 200 sets the base information of the style information selected in the window 280 in FIG. 8 in the region 282a-1. The producer terminal 200 displays the melody information of the style information selected in the window 280 in FIG. 8 on the melody information display section 282b.

The producer C1 can change the base note set in the region 282a-1 to his/her preference. For example, the producer C1 changes the base information by operating the selection button of the region 282a-2 and the region 282a-1. When the base information is changed, new style information is generated and added to the style information list 280a as in the above-described case where the chord progression information is changed. When the change of the base information is completed in the window 282, the information processing device 100 is notified of the changed style information.

The information processing device 100 executes machine learning of the composition model on the basis of the updated style information. Upon receiving a composition request for the updated style information from the producer terminal 200, the information processing device 100 automatically creates new melody information of the updated style information using the composition model. The information processing device 100 notifies the producer terminal 200 of the new melody information and displays the new melody information in the window. For example, the information processing device 100 displays new melody information on the melody information display section 281b or the like included in the window 281 in FIG. 9.

Here, new melody information generated by the composition model of the information processing device 100 can be arranged. The producer C1 operates the producer terminal 200 to designate a bar to be arranged, and makes an arrangement request to the information processing device 100. The bar to be arranged is referred to as an arrangement target bar. Referring to FIG. 9, for example, the producer C1 operates the producer terminal 200 to designate an arrangement target bar 281b-1.

The information processing device 100 arranges the melody information of the arrangement target bar among all bars of the melody information. For example, the information processing device 100 may have an arrangement table in which parameters and arrangement rules learned in advance are associated with each other, and may execute an arrangement according to a designated parameter when the parameter is designated by the producer C1. The information processing device 100 stores the score information 740 included in the arranged melody information as a history.

The above processing can be repeatedly executed, and the style information of the producer C1 is accumulated in the score information 740 preferred by the producer C1, so that the style information is optimized to the preference of the producer C1.

### [1-2. Configuration of information processing system according to embodiment]

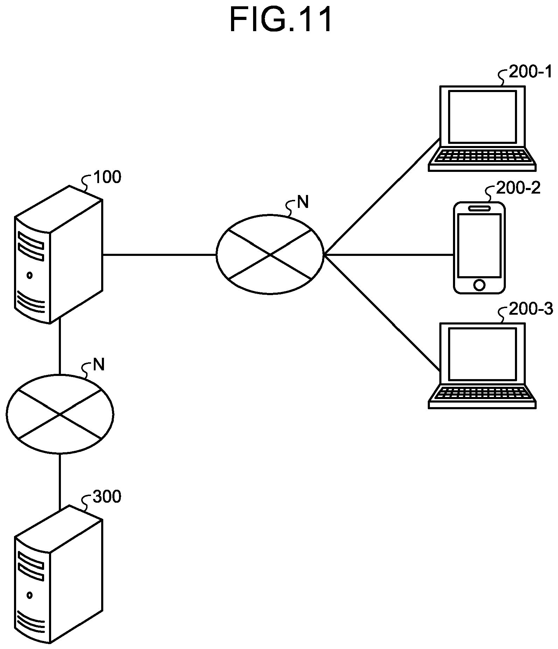

FIG. 11 is a diagram illustrating an example of an information processing system according to the embodiment. As illustrated in FIG. 11, the information processing system includes the information processing device 100, producer terminals 200-1 to 200-3, and a service server 300. In the example illustrated in FIG. 11, the producer terminals 200-1 to 200-3 are illustrated, but they are referred to as producer terminals 200 when described without particular distinction. The information processing device 100 is connected to the producer terminal 200 via the network N. The information processing device 100 is connected to the service server 300 via the network N.

The information processing device 100 provides an interface for generating the style information to the producer terminal 200, and acquires the style information from the producer terminal 200. The information processing device 100 generates new music information on the basis of the acquired style information and provides the music information to the producer terminal 200.

The producer terminal 200 receives provision of the interface from the information processing device 100, and displays the window described in FIGS. 1 to 7 and the like. The producer terminal 200 receives an input of information regarding the style information from the producer, and provides the style information to the information processing device 100.

The producer terminal 200 receives provision of the interface from the information processing device 100, and displays the style information list illustrated in FIG. 8 or the like. The producer terminal 200 receives a selection of the style information and an update of the selected style information from the producer, and notifies the information processing device 100 of the updated style information.

The service server 300 provides services related to various social networking services (SNSs). For example, the service server 300 receives provision of the score information 740 included in the style information from the information processing device 100, and generates MP3 on the basis of the score information 740 and Musical Instrument Digital Interface (MIDI) information. The service server 300 posts the generated MP3 to various SNS sites, and collects the evaluation information from the user of the SNS site.

### [1-3. Configuration of information processing device 100 according to embodiment]

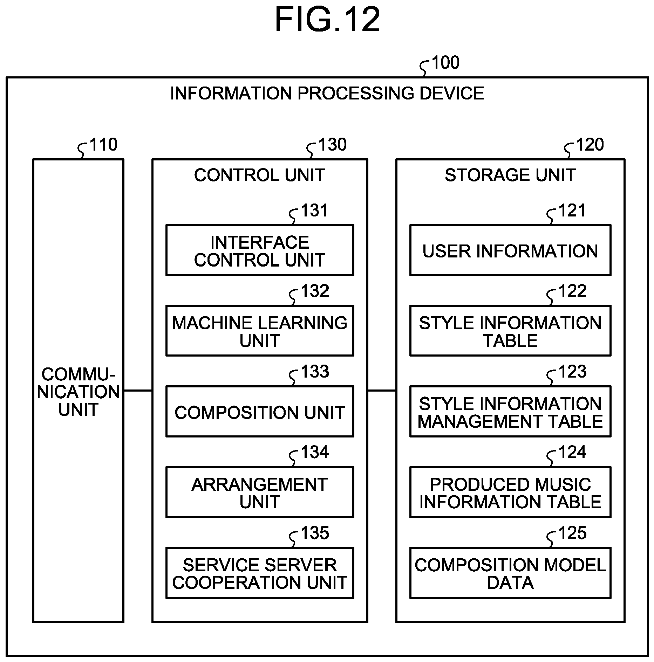

Next, a configuration of the information processing device 100 illustrated in FIG. 11 will be described with reference to FIG. 12. FIG. 12 is a diagram illustrating a configuration example of the information processing device 100 according to the embodiment. As illustrated in FIG. 12, the information processing device 100 includes a communication unit 110, a storage unit 120, and a control unit 130.

The communication unit 110 is implemented by, for example, a network interface card (NIC) or the like. The communication unit 110 is connected to the network N in a wired or wireless manner, and transmits and receives information to and from the producer terminal 200 and the service server 300 via the network N.

The storage unit 120 is implemented by, for example, a semiconductor memory element such as a random access memory (RAM) or a flash memory, or a storage device such as a hard disk or an optical disk. The storage unit 120 stores various data used for information processing. The storage unit 120 includes user information 121, a style information table 122, a style information management table 123, a produced music information table 124, and composition model data 125.

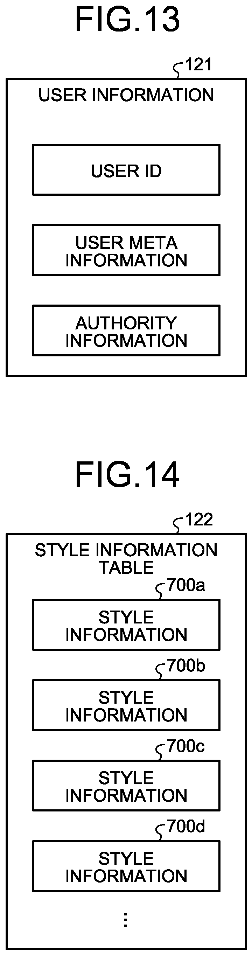

The user information 121 stores various types of information (user information) regarding the user. FIG. 13 is a diagram illustrating an example of the user information 121 according to the embodiment.

The user information 121 includes a user ID, user meta information, and authority information. The user information 121 stores the user meta information and the authority information corresponding to each user ID in association with each user ID.

The user ID indicates identification information for uniquely specifying the user. For example, the user ID indicates identification information for uniquely specifying a user such as a producer, a general user, or a system administrator. The user meta information is, for example, additional information of the user such as a name and an address of the user. As the authority information, for example, values for identifying authority such as system administrator authority information, producer authority information, and general user authority information are stored. Note that the user information 121 is not limited to the above, and various types of information may be stored according to the purpose. Various pieces of information related to the user may be stored in the user meta information. For example, in a case where the user is a natural person, demographic attribute information such as gender and age of the user, psychographic attribute information, and the like may be stored in the user meta information.

The style information table 122 holds a plurality of pieces of style information provided from the producer terminal 200. FIG. 14 is a diagram illustrating an example of the style information table 122 according to the embodiment. As illustrated in FIG. 14, the style information table 122 includes a plurality of pieces of style information 700A to 700d. The style information table 122 may include style information other than the pieces of style information 700A to 700d. The description regarding the pieces of style information 700a to 700d is similar to the description regarding the style information 700 described in FIG. 2.

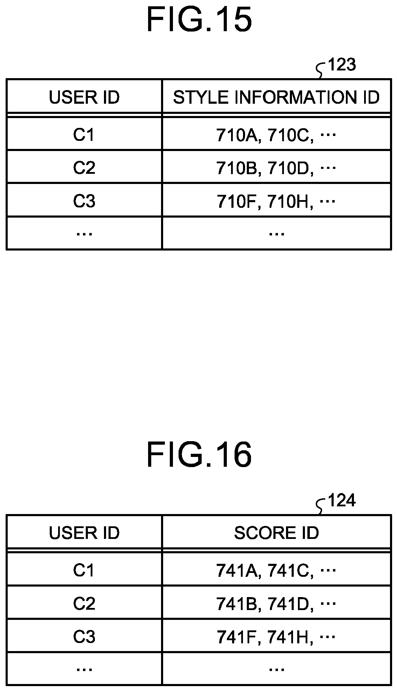

The style information management table 123 holds information that associates style information with a producer who created the style information. FIG. 15 is a diagram illustrating an example of the style information management table 123 according to the embodiment. As illustrated in FIG. 15, the style information management table 123 associates the user ID with the style information ID. The user ID indicates identification information for uniquely specifying the user. The style information ID is information for identifying the style information. For example, the first row of the style information management table 123 indicates that the producer of the user ID "C1" has created the style information of style information ID 710A and the style information of style information ID 710B.

The produced music information table 124 holds information that associates score information with a producer who produced the score information. FIG. 16 is a diagram illustrating an example of the produced music information table 124 according to the embodiment. As illustrated in FIG. 16, the produced music information table 124 associates the user ID with the score ID. The user ID indicates identification information for uniquely specifying the user. The score ID is information for identifying the score information.

The composition model data 125 is data of a composition model generated by executing the machine learning using a plurality of pieces of style information included in the style information table 122 as inputs. For example, in such a composition model, the relationship between the time-series feature amounts of the chord progression information, the base information, and the rhythm information and the time-series feature amount of the melody information is learned, and thus, when the chord progression information, the base information, and the rhythm information are input to the composition model, the melody information estimated from the input chord progression information, the base information, and the rhythm information is predicted, thereby automatically generating the music information. The composition model corresponds to a Markov model or the like.

In the embodiment, a case where the melody information is predicted using the composition model will be described, but the present invention is not limited thereto, and composition model data 125 may be generated by executing the machine learning for predicting the chord progression information, the base information, and the rhythm information.

The description returns to FIG. 12. The control unit 130 is implemented by, for example, a central processing unit (CPU), a micro processing unit (MPU), or the like executing a program stored inside the information processing device 100 using a random access memory (RAM) or the like as a work area. Furthermore, the control unit 130 is a controller, and may be implemented by, for example, an integrated circuit such as an application specific integrated circuit (ASIC) or a field programmable gate array (FPGA).

The control unit 130 includes an interface control unit 131, a machine learning unit 132, a composition unit 133, an arrangement unit 134, and a service server cooperation unit 135.

The interface control unit 131 is a processing unit that provides an interface capable of generating music information such as the style information to the producer terminal 200. First, processing of the interface control unit 131 regarding the windows 270 to 274 described with reference to FIGS. 3 to 7 will be described.

The interface control unit 131 transmits the information of the windows 270 to 274 described with reference to FIGS. 3 to 7 to the producer terminal 200. The producer terminal 200 displays the windows 270 to 274 described with reference to FIGS. 3 to 7, and receives an input of style information from the producer. The interface control unit 131 receives the style information from the producer terminal 200. For example, the style information is associated with the user ID.

The interface control unit 131 registers the style information received from the producer terminal 200 in the style information table 122. The interface control unit 131 registers the relationship between the style information ID included in the style information and the user ID in the style information management table 123.

The style information received by the interface control unit 131 from the producer terminal 200 includes a plurality of pieces of melody information with respect to fixed chord progression information, base information, and rhythm information.

In a case where any of the plurality of pieces of score information included in the style information is designated, the interface control unit 131 registers the score ID of the designated score information and the user ID in the produced music information table 124 in association with each other. For example, the producer operates the producer terminal 200 to specify the favorite score information.

Next, processing of the interface control unit 131 regarding the windows 280 to 282 described with reference to FIGS. 8 to 10 will be described. The interface control unit 131 causes the producer terminal 200 to display the information of the windows 280 to 282 described with reference to FIGS. 8 to 10. For example, the interface control unit 131 displays the name corresponding to the style information registered in the style information table 122 in the style information list 280a of the window 280 in FIG. 8.

When the producer selects one of the names of the style information displayed in the style information list 280a of the window 280, the producer terminal 200 notifies the interface control unit 131 of the style information ID corresponding to the selected name.

Upon receiving the style information ID, the interface control unit 131 acquires the style information corresponding to the style information ID from the style information table 122, and transmits the acquired style information to the producer terminal 200. By executing such processing, the interface control unit 131 sets the chord progression information of the style information in the region 281a-1 of the window 281 in FIG. 9.

In a case where the chord progression information is changed in the window 281 in FIG. 9, the interface control unit 131 generates new style information and registers the generated new style information in the style information table 122.

Further, by the interface control unit 131 transmitting the style information to the producer terminal 200, the base information of the style information is set in the region 282a-2 of the window 282 in FIG. 10. Even in a case where the base information is changed in the window 282 in FIG. 10, the interface control unit 131 generates new style information and registers the generated new style information in the style information table 122.

Here, in a case of receiving a request for composition processing based on the changed style information from the producer terminal 200, the interface control unit 131 outputs the changed style information to the composition unit 153. The interface control unit 131 acquires the melody information corresponding to the changed style information from the composition unit 153, and transmits the acquired melody information to the producer terminal 200. Consequently, the new melody information is displayed on the melody information display section 281b or the like included in the window 281 in FIG. 9. In a case of receiving a request to add style information including the new melody information from the producer terminal 200, the interface control unit 131 registers the style information including the new melody information in the style information table 122.

In a case of receiving the designation of the parameter and the arrangement target bar, the interface control unit 131 outputs the melody information and the parameter and the information of the arrangement target bar to the arrangement unit 154. The interface control unit 131 acquires the arranged melody information from the arrangement unit 154, and transmits the acquired melody information to the producer terminal 200. In a case of receiving a request to add style information including the arranged melody information from the producer terminal 200, the interface control unit 131 registers the style information including the arranged melody information in the style information table 122.

By the interface control unit 131 executing the above-described processing, the new style information is accumulated in the style information table 122.

The machine learning unit 152 generates the composition model data 125 on the basis of the style information registered in the style information table 122. For example, the machine learning unit 152 generates the composition model data 125 by performing machine learning on the relationship between the time-series feature amounts of the chord progression information, the base information, and the rhythm information and the time-series feature amount of the melody information. The machine learning unit 152 may generate the composition model data 125 by using a music generation algorithm using a Markov chain, or may generate the composition model data 125 by using a music generation algorithm using deep learning. The machine learning unit 152 may acquire new style information from the interface control unit 131 and relearn the composition model.

The composition unit 133 generates melody information on the basis of the style information and the composition model data 125. For example, upon acquiring the changed style information from the interface control unit 131, the composition unit 133 inputs the time-series feature amounts of the chord progression information, the base information, and the rhythm information included in the style information to the composition model, and predicts (composes) the time-series feature amount of the melody information. The composition unit 133 outputs the predicted melody information (new music information) to the interface control unit 131.

Upon receiving the melody information, the parameter, and the information of the arrangement target bar, the arrangement unit 134 arranges the time-series feature amount in the arrangement target bar of the melody information. For example, the arrangement unit 134 has an arrangement table in which parameters and arrangement rules learned in advance are associated with each other, and executes an arrangement according to a parameter designated by the producer. The arrangement unit 134 outputs the arranged melody information to the interface control unit 131.

The service server cooperation unit 135 notifies the service server 300 of the style information and provides services related to various SNSs. The service server cooperation unit 135 provides the score information 740 included in the style information of the style information table 122 to the service server 300. The service server cooperation unit 135 receives, from the service server 300, the evaluation information regarding the score information 470 from the service server 300, and stores the received evaluation information in association with the style information. The interface control unit 131 may display the evaluation information in association with the name of the style information displayed in the style information list 280a of the window 280.

### [1-4. Configuration of producer terminal 200 according to embodiment]

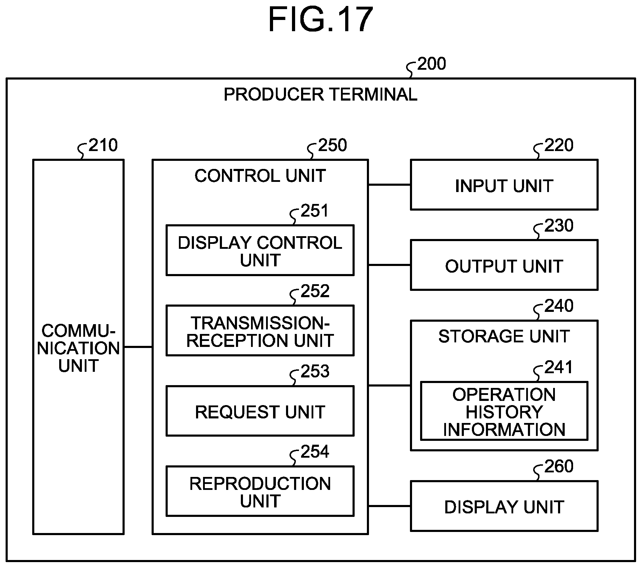

Next, a configuration of the producer terminal 200 illustrated in FIG. 11 will be described with reference to FIG. 17. FIG. 17 is a diagram illustrating a configuration example of the producer terminal 200 according to the embodiment. As illustrated in FIG. 17, the producer terminal 200 includes a communication unit 210, an input unit 220, an output unit 230, a storage unit 240, a control unit 250, and a display unit 260.

The communication unit 210 is implemented by, for example, an NIC, a communication circuit, or the like. The communication unit 210 is connected to the network N in a wired or wireless manner, and transmits and receives information to and from other devices such as the information processing device 100 and other terminal devices via the network N.

Various operations are input to the input unit 220 from the user. The input unit 220 includes a keyboard and a mouse connected to a producer terminal 2000. The input unit 220 receives an input from the user. The input unit 220 receives the user's input using the keyboard or the mouse. The input unit 220 may have a function of detecting a voice. In this case, the input unit 220 may include a microphone that detects a voice.

Various types of information may be input to the input unit 220 via the display unit 260. In this case, the input unit 220 may have a touch panel capable of achieving functions equivalent to those of a keyboard and a mouse. In this case, the input unit 220 receives various operations from the user via the display screen by a function of a touch panel implemented by various sensors. Note that, as a method of detecting the user's operation by the input unit 220, a capacitance method is mainly employed in the tablet terminal, but any method may be employed as long as the user's operation can be detected and the function of the touch panel can be implemented, such as a resistive film method, a surface acoustic wave method, an infrared method, and an electromagnetic induction method, which are other detection methods. Furthermore, the producer terminal 200 may have an input unit that also receives an operation by a button or the like.

Furthermore, the producer may use input unit 220 to input the MP3 information to be set in the accompaniment audio information 760.

The output unit 230 outputs various types of information. The output unit 230 includes a speaker that outputs sound.

The storage unit 240 is implemented by, for example, a semiconductor memory element such as a RAM or a flash memory, or a storage device such as a hard disk or an optical disk. The storage unit 240 stores various types of information used for displaying information. The storage unit 240 stores operation history information 241.

The operation history information 241 is information indicating a history of operations performed on the producer terminal 200 by the producer who creates the music when the application is activated. For example, the operation history information 241 may include various types of information regarding an operation of the producer, such as content of an operation performed by the producer and the date and time when the operation is performed. Examples of the operation include a selection of style information presented from the information processing device 100, a selection of a composition execution instruction button, and reproduction, editing, and production of music information received from the information processing device 100, and the like.

The control unit 250 is implemented by, for example, a CPU, an MPU, or the like executing a program stored inside the producer terminal 200 using a RAM or the like as a work area. Furthermore, the control unit 250 is a controller, and may be implemented by, for example, an integrated circuit such as an ASIC or an FPGA. The control unit 250 includes a display control unit 251, a transmission-reception unit 252, a request unit 253, and a reproduction unit 254.

The display control unit 251 controls various displays on the display unit 260. The display control unit 251 controls display on the display unit 260. The display control unit 251 controls display on the display unit 260 on the basis of the information received from the information processing device 100. The display control unit 251 controls display on the display unit 260 on the basis of information generated by processing by each component of the control unit 250. The display control unit 251 may control the display of the display unit 260 by an application that displays an image.

The display control unit 251 causes the display unit 260 to display the windows 270 to 274, and 280 to 283 (see FIGS. 3 to 10) and the like by the application of the automatic composition function by the DAW and the AI. For example, the information of the windows 270 to 274, and 280 to 283 is transmitted from the interface control unit 131. The display control unit 251 causes the region 282b of the window 282 or the like to display newly composed melody information or arranged melody information received by the request unit 253 as described later from the information processing device 100.

The transmission-reception unit 252 communicates with the information processing device 100, and transmits and receives various types of information. When the automatic composition function is activated, the transmission-reception unit 252 receives the style information transmitted from the information processing device 100. The transmission-reception unit 252 transmits the style information ID selected by the producer to the information processing device 100. Then, the transmission-reception unit 252 receives the style information from the information processing device 100. Furthermore, the transmission-reception unit 252 transmits music information (style information) of a melody arranged and produced by the producer, or the like to the information processing device 100.

The request unit 253 makes a composition request and an arrangement request to the information processing device 100. For example, when new style information is generated in the window 282 and an instruction of a composition request is received from the producer, information of the composition request including the chord progression information, the base information, and the rhythm information is transmitted to the information processing device 100. Consequently, the information processing device 100 generates new melody information and transmits the new melody information to the producer terminal 200.

Furthermore, upon receiving an instruction of an arrangement target bar and a parameter from the producer, the request unit 253 transmits an arrangement request including the melody information, the arrangement target bar, and the parameter to the information processing device 100. Consequently, the information processing device 100 arranges the arrangement target bar of the melody information and transmits the arranged new melody information to the producer terminal 200.

The reproduction unit 254 reproduces the music information generated by the information processing device 100. Specifically, the reproduction unit 254 sets arbitrary instrument information for each of the melody, the chord, and the base sound included in the music data, and reproduces each piece of data. Note that the reproduction unit 254 may reproduce a combination of each of a melody, a chord, and a base sound.

Further, in a case where the producer performs performance together with composition provided by the automatic composition function, the control unit 250 receives the performance by the producer. Furthermore, the control unit 250 also receives processing related to arrangement of composition provided by the automatic composition function and production of music by the producer.

The display unit 260 displays various types of information. The display unit 260 is implemented by, for example, a liquid crystal display, an organic electroluminescence (EL) display, or the like. The display unit 260 displays various types of information under control of the display control unit 251. The display unit 260 can also display information such as an image (interface) provided from the information processing device 100.

### [1-5. Procedure of information processing according to embodiment]

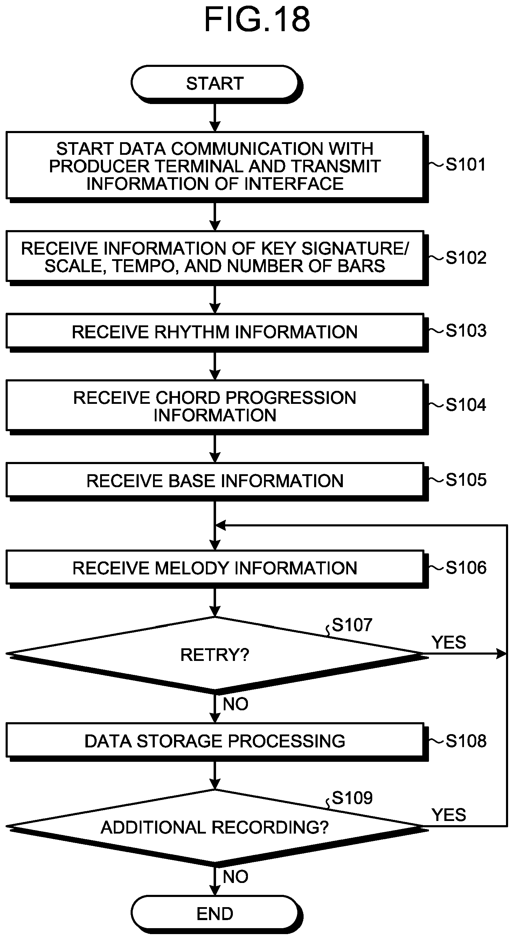

Next, a procedure of various types of information processing according to the embodiment will be described with reference to FIG. 18. FIG. 18 is a flowchart (1) illustrating a procedure of the information processing device 100 according to the embodiment. The processing of FIG. 18 corresponds to the processing described with reference to FIGS. 3 to 7. The interface control unit 131 of the information processing device 100 starts data communication with the producer terminal 200 and transmits information of the interface (step S101).

The interface control unit 131 receives the information of key signature/scale, tempo, and the number of bars selected by the producer from the producer terminal 200 in the window 270 in FIG. 3 (step S102). In the window 271 in FIG. 4, the interface control unit 131 receives rhythm information input by the producer from the producer terminal 200 (step S103). The interface control unit 131 receives the chord progression information input by the producer from the producer terminal 200 in the window 272 in FIG. 5 (step S104).

The interface control unit 131 receives the base information input by the producer from the producer terminal 200 in the window 273 in FIG. 6 (step S105). The interface control unit 131 receives the melody information input by the producer from the producer terminal 200 in the window 274 in FIG. 7 (step S105). In a case where retry of the melody information is performed (step S107, Yes), the processing proceeds to step S106. In a case where retry of the melody information is not performed (step S107, No), the processing proceeds to step S108.

The interface control unit 131 executes data storage processing (step S108). In step S108, the interface control unit 131 generates style information on the basis of the information of the key signature/scale, the tempo, and the number of bars, the rhythm information, the chord progression information, the base information, the melody information, and the like received from the producer terminal 200, and registers the style information in the style information table 122. Note that the style information may be generated on the producer terminal 200 side, and the interface control unit 131 may receive the style information.

In a case where additional recording of the melody information is executed (step S109, Yes), the processing proceeds to step S106. On the other hand, in a case where the additional recording of the melody information is not executed (step S109, No), the interface control unit 131 ends the processing.

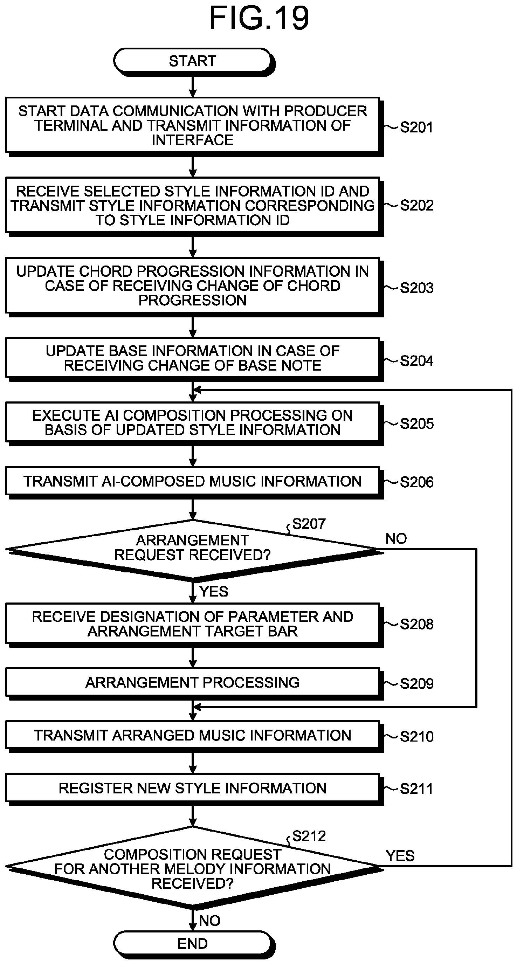

FIG. 19 is a flowchart (2) illustrating a procedure of the information processing device 100 according to the embodiment. The processing of FIG. 19 corresponds to the processing described with reference to FIGS. 8 to 10 and the like. The interface control unit 131 of the information processing device 100 starts data communication with the producer terminal 200 and transmits interface information (step S201).

The interface control unit 131 receives the style information ID of the selected style name in the window 280 in FIG. 8 from the producer terminal 200. The interface control unit 131 transmits the style information corresponding to the style information ID to the producer terminal 200 (step S202).

In a case of receiving a change of the chord progression information in the window 281 in FIG. 9, the interface control unit 131 updates the chord progression information (step S203). In a case of receiving a change of the base note in the window 282 in FIG. 10, the interface control unit 131 updates the base information (step S204).

The composition unit 133 of the information processing device 100 executes the AI composition processing on the basis of the updated style information (step S205). The interface control unit 131 transmits AI-composed music information (melody information) to the producer terminal 200 (step S206).

In a case of not receiving the arrangement request from the producer terminal 200 (step S207, No), the interface control unit 131 proceeds to step S210. On the other hand, in a case of receiving the arrangement request from the producer terminal 200 (step S207, Yes), the interface control unit 131 proceeds to step S208.

The interface control unit 131 receives designation of the parameter and the arrangement target bar (step S208). The arrangement unit 134 of the information processing device 100 executes arrangement processing on the arrangement target bar of the melody information (step S209). The interface control unit 131 transmits the arranged music information (melody information) to the producer terminal 200 (step S210).

The interface control unit 131 registers the new style information in the style information table 122 (step S220). In a case of receiving a composition request for another melody information (step S212, Yes), the interface control unit 131 proceeds to step S205. On the other hand, in a case of not receiving a composition request for another melody information (step S212, No), the interface control unit 131 ends the processing.

### [1-6. Effects according to embodiment]

As described above, the information processing device 100 provides the producer terminal 200 with an interface capable of generating music information by fixing a part of elements among a plurality of elements forming the music information and editing other elements. The information processing device 100 generates new music information on the basis of a plurality of pieces of music information created using the interface. For example, the music information corresponds to the score information 740 of the style information 700. The fixed elements are the chord progression information, the base information, and the rhythm information. The other elements are melody information, and when a plurality of pieces of melody information is generated, a plurality of pieces of score information 740 corresponding to the melody information is generated. Consequently, the producer can easily create the style information (a plurality of pieces of the melody information, the chord progression information, the base information, and the rhythm information), and the information processing device 100 can easily receive provision of the style information.

The information processing device 100 generates new music information by inputting the plurality of pieces of music information to the learning model. Consequently, new music information can be easily created on the basis of the plurality of pieces of music information. For example, new melody information can be generated on the basis of the chord progression information, the base information, and the rhythm information included in the style information.

The information processing device 100 relearns the learning model on the basis of the plurality of pieces of music information created by the producer. Consequently, new music information according to the preference of the producer can be generated.

The information processing device 100 makes a plurality of pieces of style information selectable, displays the plurality of pieces of style information on the producer terminal 200, and displays, in a viewable manner, each feature amount of the melody information, the chord progression information, the base information, and the rhythm information included in the selected style information. Thus, editing work can be executed based on the already created style information.

In a case where each feature amount of the melody information, the chord progression information, the base information, and the rhythm information of the style information is updated, the information processing device 100 performs registration as new style information. Consequently, the new style information can be easily created from a clone of the style information.

In a case where a range is specified for the melody information of the style information and an arrangement request is received, the information processing device 100 executes the arrangement processing on the specified range. Consequently, it is possible to easily create the melody information in which existing melody information is arranged. The information processing device 100 may execute the arrangement processing in a case where a range is designated for not only the melody information but also the chord progression information, the base information, and the rhythm information.

Every time new style information is generated, the information processing device 100 stores the style information in association with the user ID. Consequently, a plurality of pieces of style information generated by the producer can be accumulated by the AI composition work.

The plurality of pieces of style information stored in the information processing device 100 can be used in other services such as an SNS by cooperating with the service server 300. For example, the service server 300 can collect evaluation information of the style information by disclosing the style information, and display the evaluation information in association with the style information. Note that the accompaniment audio information 760 is set in the style information, and can give a variation of performance.

### [2. Schematic diagram of configuration of information processing system]

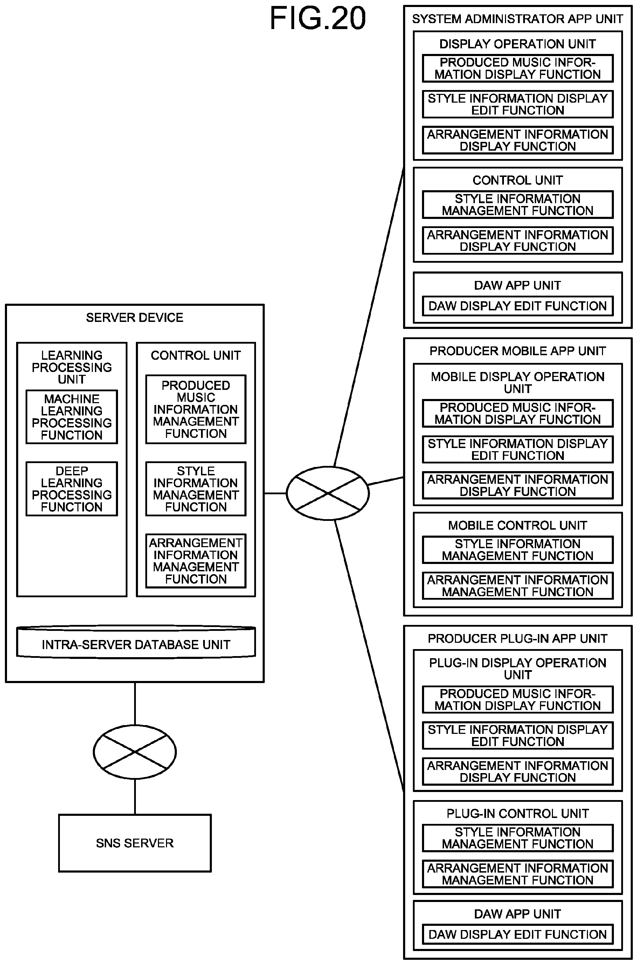

Here, each function, a hardware configuration, and data in the information processing system are conceptually illustrated using the drawing. FIG. 20 is a diagram illustrating an example of a conceptual diagram of a configuration of an information processing system. Specifically, FIG. 20 is a schematic diagram illustrating a functional outline of the information processing system in FIG. 11.

### [2-1. Overall configuration]

The server device illustrated in FIG. 20 corresponds to the information processing device 100. Further, a system administrator app unit illustrated in FIG. 20 corresponds to an app installed in a terminal used by the system administrator. The producer mobile app unit illustrated in FIG. 20 corresponds to the producer terminal 200 in the information processing system and corresponds to an app installed in the producer terminal 200. Furthermore, a producer plug-in app unit illustrated in FIG. 20 corresponds to the producer terminal 200 in the information processing system, and corresponds to an app installed in the producer terminal 200. In the example of FIG. 20, one system administrator app unit, one producer mobile app unit, and one producer plug-in app unit are illustrated, but a plurality of these may be included according to the number of corresponding terminals.

A learning processing unit and a control unit of the server device illustrated in FIG. 20 correspond to the control unit 130 of the information processing device 100. For example, the learning processing unit of the server device corresponds to the composition unit 133 of the information processing device 100. An intra-server database unit of the server device corresponds to the storage unit 120 of the information processing device 100.

A display operation unit, a control unit, a DAW app unit, a mobile display operation unit, a mobile control unit, a plug-in display operation unit, and a plug-in control unit of a producer app unit illustrated in FIG. 20 correspond to the control unit 250 of the producer terminal 200.

An SNS server illustrated in FIG. 20 corresponds to the service server 300.

As illustrated in FIG. 20, the server device is connected to the system administrator app unit, the producer mobile app unit, and the producer plug-in app unit via a network N such as the Internet. The server device is connected to the SNS server.

### [2-2. Server device]

First, a configuration related to a server device will be described.

The server device includes the control unit, the learning processing unit, and the intra-server database unit. The control unit of the server device has a produced music information management function, a style information management function, and an arrangement information management function. The learning processing unit of the server device has a machine learning processing function and a deep learning processing function.

### [2-3. App unit]

Next, a configuration related to the system administrator app unit will be described.

The system administrator app unit includes a display operation unit, a control unit, and a DAW app unit. The display operation unit has a produced music display function, a style information display edit function, and an arrangement information display function. The control unit has the style information management function and arrangement information management.

The DAW app unit has a DAW display edit function. The DAW app unit is, for example, music editing software (DAW or the like), and can display, for example, music information in the work information display function. If the DAW has, for example, an AI assisted music production function, it is possible to produce new music information while using the style information display editing function. Note that the system administrator app unit has a similar configuration, and has different authority with respect to the system of the user.

The producer mobile app unit will be described.

The producer app unit includes a mobile display operation unit and a mobile control unit. The mobile display operation unit has the produced music display function, the style information display edit function, and the arrangement information display function. The mobile control unit has the style information management function and the arrangement information management.

The producer plug-in app unit will be described.

The producer plug-in app unit includes a plug-in display operation unit, a plug-in control unit, and a DAW app unit. The plug-in display operation unit has the produced music display function, the style information display edit function, and the arrangement information display function. The plug-in control unit has the style information management function and the arrangement information management. The DAW app unit is similar to the description regarding the DAW display edit function described above.

### [3. Other Embodiments]

The processing according to the above-described embodiments and modifications may be performed in various different modes (modifications) other than the above-described embodiments and modifications.

In the description of the above-described embodiment, the chord progression information, the base information, and the rhythm information are set, and when the input of the melody information is received, these pieces of information are recorded as the score information. However, a DAW display edit unit of the DAW app unit edits the chord progression information, the base information, the rhythm information, and the plurality of pieces of melody information, and the plug-in control unit reads the information of the DAW app unit and uploads the read information to the control unit 130 included in the information processing device 100, so that the style information can be collectively stored.

In the example described with reference to FIG. 9, the producer himself/herself edits the chord progression information, but communication with the information processing device 100 may be performed and an arrangement request for the chord progression information may be made, and recommend the arranged chord progression information.

In the above description of the embodiment, the melody information is arranged, but for example, the melody information can be fixed, and a change can be added to the chord progression information by the arrangement processing. For example, chord progression information of |C|Dm|Em|F| can be arranged into chord progression of |C|FM7|G7|F| by performing the arrangement processing.

In the description of the above-described embodiment, the information processing device 100 provides the score information 740 to the service server 300, but a composition contest can be held among a plurality of producers, and a general user can post the score information in the contest. The service server 300 can count the evaluation information, give a ranking, and determine the winner. Furthermore, the service server 300 may notify the information processing device 100 of the score information posted in the contest, and the information processing device 100 may generate and store new style information using the notified score information.

In the description of the embodiment described above, the information processing device 100 displays the window 280 in FIG. 8 to allow the producer to select the style information, but various display methods may be mentioned as the method of displaying the style information possibilities. For example, the information processing device 100 may cause a list classified for each category of the style information to be displayed, may cause a catalog in a card format with an image of the style information as a background to be displayed, or may map the style information on three-dimensional graphics and allow the user to search.

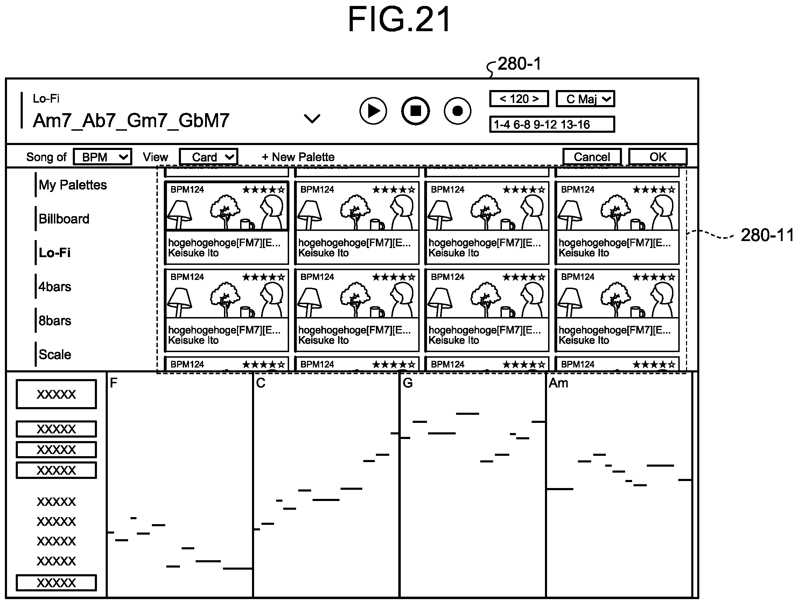

FIG. 21 is a diagram illustrating an example of catalog display. As illustrated in FIG. 21, in a window 280-1, the catalog in a card format with an image of the style information as a background is displayed in a region 280-11.

In processing of mapping on three-dimensional graphics and allowing the producer to search, the information processing device 100 plots points corresponding to the style information in a space constituted of an X axis, a Y axis, and a Z axis on the basis of the score information (feature amounts of the melody information, the chord progression information, the base information, and the rhythm information) of the style information. The X axis is an axis indicating dark (minor) and bright (major), and indicates that it is brighter toward the positive direction. The Y axis is an axis indicating simple and tension, and indicates that it is more complicated toward the positive direction. The Z axis is an axis indicating that the tempo of the BPM is slow or fast, and indicates that the tempo is faster toward the positive direction.

In a case where a point plotted on the three-dimensional graphic is selected, the information processing device 100 acquires style information corresponding to the selected point from the style information table 122, transmits the acquired style information to the producer terminal 200, and causes the style information to be displayed. Consequently, features of the style information can be visually grasped, the style information preferred by the producer can be selected, and various types of editing can be performed.

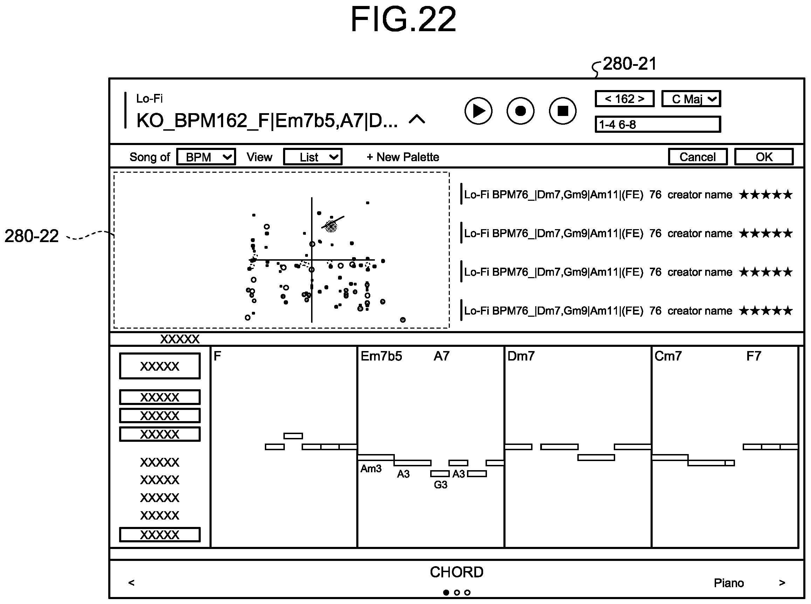

FIG. 22 is a diagram illustrating an example of mapping by three-dimensional graphics. As illustrated in FIG. 22, in the window 280-2, points corresponding to the features of the style information are set on a three-dimensional space 280-21.

### [4. Hardware configuration]

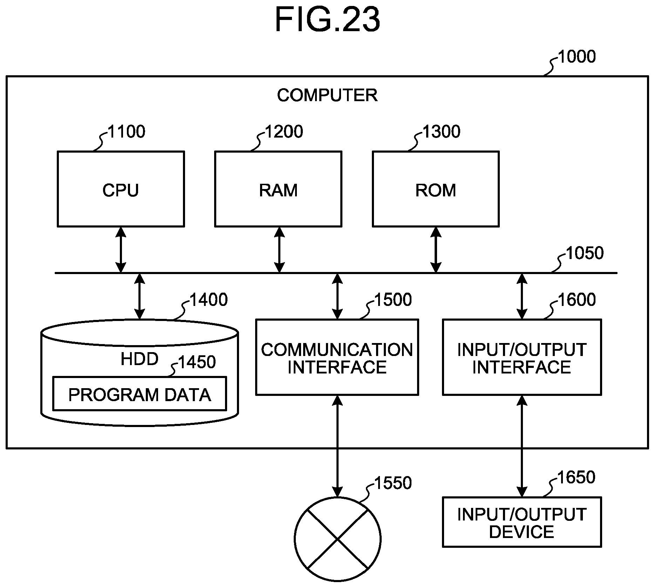

The information device such as the information processing device 100 and the producer terminal 200 according to each of the above-described embodiments and modifications is implemented by the computer 1000 having a configuration as illustrated in FIG. 23, for example. FIG. 23 is a hardware configuration diagram illustrating an example of a computer that implements the functions of the information processing device 100 and the producer terminal 200. Hereinafter, the information processing device 100 according to the embodiment will be described as an example. The computer 1000 includes a CPU 1100, a R_AM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by such a program, and the like. Specifically, the HDD 1400 is a recording medium that records an information processing program according to the present disclosure as an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. Further, the CPU 1100 transmits data to an output device such as a display, a speaker, or a printer via the input/output interface 1600. Furthermore, the input/output interface 1600 may function as a media interface that reads a program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 100 according to the embodiment, the CPU 1100 of the computer 1000 implements the functions of the control unit 130 and the like by executing the information processing program loaded on the RAM 1200. In addition, the HDD 1400 stores an information processing program according to the present disclosure and data in the storage unit 120. Note that the CPU 1100 reads the program data 1450 from the HDD 1400 and executes the program data 1450, but as another example, these programs may be acquired from another device via the external network 1550.

### [5. Conclusion]

An information processing device is an information processing method executed by a computer, including providing an interface capable of generating music information by fixing a part of elements among a plurality of elements forming the music information and editing other elements, and generating new music information on the basis of a plurality of pieces of music information created using the interface. Consequently, the producer can easily create the style information (a plurality of pieces of the melody information, the chord progression information, the base information, and the rhythm information), and the information processing device can easily receive provision of the style information.

The information processing device generates the new music information by inputting the plurality of pieces of music information to the learning model. Consequently, new music information can be easily created on the basis of the plurality of pieces of music information.

The information processing device relearns the learning model on the basis of the plurality of pieces of music information. Consequently, new music information according to the preference of the producer can be generated.

The information processing device provides the interface, and acquires fixed feature amounts for a part of elements and a plurality of feature amounts for other elements included in the plurality of pieces of music information. Consequently, the plurality of pieces of music information can be efficiently collected and used.

The information processing device selectively displays different pieces of music information by the interface, and in a case of receiving a selection of a piece of music information from the different pieces of music information, the information processing device displays feature amounts of a plurality of elements forming the selected piece of music information in a viewable manner. Thus, editing work can be executed based on the already created style information.

In a case where the feature amount of the element forming the selected piece of music information is updated, the information processing device generates new music information having an updated feature amount. Consequently, the new style information can be easily created from a clone of the style information.

In a case where a range is specified for a feature amount of an element forming the selected piece of music information, the information processing device arranges a feature amount included in the range and generates new music information having the arranged feature amount. Consequently, it is possible to easily create melody information in which existing music information (such as melody information) is arranged.

Every time new music information is generated, the information processing device stores the new music information in association with identification information of a user. Consequently, a plurality of pieces of style information generated by the producer can be accumulated by the AI composition work.

The information processing device maps a point corresponding to the music information in a multidimensional space on the basis of a feature amount included in the music information, and displays the mapped point. Consequently, features of the style information can be visually grasped, the style information preferred by the producer can be selected, and various types of editing can be performed.

### Reference Signs List

- 100: INFORMATION PROCESSING DEVICE
- 110, 210: COMMUNICATION UNIT
- 120, 240: STORAGE UNIT
- 121: USER INFORMATION
- 122: STYLE INFORMATION TABLE
- 123: STYLE INFORMATION MANAGEMENT TABLE
- 124: PRODUCED MUSIC INFORMATION TABLE
- 125: COMPOSITION MODEL DATA
- 130, 250: CONTROL UNIT
- 131: INTERFACE CONTROL UNIT
- 132: MACHINE LEARNING UNIT
- 133: COMPOSITION UNIT
- 134: ARRANGEMENT UNIT
- 135: SERVICE SERVER COOPERATION UNIT
- 200: PRODUCER TERMINAL
- 220: INPUT UNIT
- 230: OUTPUT UNIT
- 241: OPERATION HISTORY INFORMATION
- 251: DISPLAY CONTROL UNIT
- 252: TRANSMISSION-RECEPTION UNIT
- 253: REQUEST UNIT
- 254: REPRODUCTION UNIT
- 260: DISPLAY UNIT

## Claims

1. An information processing method for generating music information, the method including:
providing an interface capable of generating the music information by editing a part of elements forming the music information; and
generating new music information by a machine learning model on a basis of a plurality of pieces of music information created using the interface.

2. The information processing method according to claim 1, wherein the machine learning model is relearned on a basis of the plurality of pieces of music information.

3. The information processing method according to claim 1, wherein the interface is provided, and fixed feature amounts for a part of elements and a plurality of feature amounts for other elements included in the plurality of pieces of music information are acquired.

4. The information processing method according to claim 1, wherein different pieces of music information are selectively displayed by the interface, and in a case where a selection of a piece of music information is received from the different pieces of music information, feature amounts of a plurality of elements forming the selected piece of music information are displayed in a viewable manner.

5. The information processing method according to claim 4, wherein in a case where a feature amount of an element forming the selected piece of music information is updated, new music information having an updated feature amount is generated.

6. The information processing method according to claim 3, wherein in a case where a range is specified for a feature amount of an element forming the selected piece of music information, a feature amount included in the range is arranged, and new music information having the arranged feature amount is generated.

7. The information processing method according to claim 1, wherein every time new music information is generated, the new music information is stored in association with identification information of a user.

8. The information processing method according to claim 3, wherein a point corresponding to the music information is mapped in a multidimensional space on a basis of a feature amount included in the music information, and the mapped point is displayed.

9. An information processing program for causing a computer to function as:
an interface control unit that provides an interface capable of generating music information by editing a part of elements forming the music information; and
a composition unit that generates new music information by a machine learning model on a basis of a plurality of pieces of music information created using the interface.

10. An information processing device including:
an interface control unit that provides an interface capable of generating music information by editing a part of elements forming the music information; and
a composition unit that generates new music information by a machine learning model on a basis of a plurality of pieces of music information created using the interface.
